(19) Europäisches Patentamt
European Patent Office
Office européen des brevets

(11) Veröffentlichungsnummer: **0 077 937**
**B1**

(12) # EUROPÄISCHE PATENTSCHRIFT

(45) Veröffentlichungstag der Patentschrift: **14.05.86**

(51) Int. Cl.⁴: **C 08 G 18/24,** C 08 G 18/14

(21) Anmeldenummer: **82109167.5**

(22) Anmeldetag: **05.10.82**

(54) **Verfahren zur Herstellung von gegebenenfalls geschäumten Polyurethanen und lagerstabiles Vorprodukt für die Durchführung eines solchen Verfahrens.**

(30) Priorität: **16.10.81 DE 3141117**

(43) Veröffentlichungstag der Anmeldung: **04.05.83 Patentblatt 83/18**

(45) Bekanntmachung des Hinweises auf die Patenterteilung: **14.05.86 Patentblatt 86/20**

(84) Benannte Vertragsstaaten: **BE DE FR GB IT SE**

(56) Entgegenhaltungen:
**FR-A-1 411 370**
**FR-A-2 352 009**
**GB-A-1 107 697**

(73) Patentinhaber: **BAYER AG, Konzernverwaltung RP Patentabteilung, D-5090 Leverkusen 1 Bayerwerk (DE)**

(72) Erfinder: **Rasshofer, Werner, Dr., Wolfskaul 10, D-5000 Köln 80 (DE)**
Erfinder: **Kopp, Richard, Dr., Wolfskaul 12, D-5000 Köln 80 (DE)**
Erfinder: **Paul, Reiner, Dr., Oberhausenerstrasse 155, D-4330 Mühlheim/Ruhr (DE)**

**EP 0 077 937 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft ein verbessertes Verfahren zur Herstellung von gegebenenfalls geschäumten Polyurethanen sowie ein lagerstabiles Vorprodukt für die Herstellung von gegebenenfalls geschäumten Polyurethanen.

Die der Polyurethanbildung zugrundeliegende Polyadditionsreaktion zwischen Polyhydroxylverbindungen und Polyisocyanaten, insbesondere aliphatischen und alicyclischen Polyisocyanaten, bedarf, um eine für industrielle Zwecke genügend schnelle Reaktion zu erhalten, einer geeigneten Katalyse.

Es ist bekannt, hierfür Aktivatorkombinationen aus Metallverbindungen und aminischen Katalysatoren oder anderen, z.B. basischen Katalysatoren zu verwenden. Beispiele für verwendete Metallverbindungen sind etwa die Biscarboxylate von Dialkylzinnverbindungen wie Di-(n-butyl)-zinn-dilaurat oder die Bismercaptide von Dialkylzinnverbindungen wie Dimethylzinn-bis-(laurylmercaptid), Metallacetylacetonate wie Fe-II-acetylacetonat, Fe-III-acetylacetonat, Dibutylzinn-acetylacetonat, Blei-II-acetylacetonat, weiterhin Bleiverbindungen wie Blei-di (2-ethylhexanoat) oder Bismutverbindungen wie z.B. Bismut-tri-(2-ethylhexanoat). Normalerweise wird für die Herstellung von Polyurethan-Kunststoffen ein Zweikomponentensystem verwendet, wobei eine Komponente aus einem polyfunktionellen Isocyanat besteht. Die zweite Komponente enthält das Polyol und den Katalysator und gegebenenfalls das Treibmittel zusammen mit weiteren Modifizier- und Zusatzmitteln. Diese zweite Komponente wird üblicherweise vom Verarbeiter als fertig formuliertes Gemisch eingesetzt, d.h., sie wird Wochen oder Monate vor der Verarbeitung hergestellt.

Es ist bekannt, dass sowohl zwei- als auch vierwertige Zinnverbindungen, zweiwertige Blei- und dreiwertige Bismutverbindungen wirksame Katalysatoren für die Isocyanatadditionsreaktion darstellen. Einige der am meisten bevorzugten Katalysatoren sind: Sn-(II)-bis-(2-ethylhexanoat), Dibutylzinn-di-(laurylmercaptid), Dibutylzinndilaurat (DBTL), Di-alkylzinn-di-(thioglykolsäureester) wie z.B. M&T-C 131(R), Blei-II-di-(2-ethylhexanoat), Blei-II-dinaphthenat und Bismut-tri-(2-ethylhexanoat) oder Bismut-tri-(thiododecyl). Diese Katalysatoren, wie die meisten anderen Mitglieder dieser Zinn-, Blei- und Bismutverbindungsklassen, erleiden jedoch einen beträchtlichen Aktivitätsverlust, wenn sie der Polyolmischung einverleibt werden. Diese Polyolmischung enthält ein oder mehrere, kurz- bis langkettige, lineare oder verzweigte Polyole, gegebenenfalls im Gemisch mit anderen NCO-reaktive Gruppen aufweisenden Verbindungen wie z.B. Polyaminen, Treibmitteln, Zusätzen wie Zellstabilisatoren, Thermo- und Lichtstabilisatoren, insbesondere aber für gewöhnlich einen nichtmetallischen Cokatalysator wie z.B. tertiäre Amine oder Amidine. Beispielsweise werden Triethylamin, Triethylendiamin (Diazabicyclooctan, «Dabco®») oder Diazabicycloundecen (DBU) mit eingesetzt.

Durch diesen Aktivitätsverlust sind aber anwendungstechnische Nachteile bedingt.

Die DE-OS 2 722 658 schlägt als lagerstabile Zinngelkatalysatoren Verbindungen der allgemeinen Formeln

$R_2Sn\ (SCN)_2$, $[R_2Sn(SCN)]_2O$, $[R_2Sn(SCN)]_2S$, $(R_2SnX)_2S$ und
$R_2SnS$, worin
R für Kohlenwasserstoff und
X für Chlor, Brom oder Iod steht, vor.

Nachteilig an diesen Verbindungen ist ihre Schwerlöslichkeit und ihre geringe Aktivität, die sie für die meisten PU-Kunststoffe ungeeignet macht. Die obige Offenlegungsschrift setzt sie in Mengen von 0,1–10 Gew.- Tln. pro 100 g Polyol ein, deren unterster Wert schon überhalb der meist für Zinnkatalysatoren verwendeten Konzentration liegt.

Aufgabe der vorliegenden Erfindung war es, eine neue lagerstabile Grundmischung aus Polyol und aktivitätsstabilen Metall-Katalysatoren, die darüberhinaus in der Polyol-Komponente leichtlöslich sein sollten, zur Verfügung zu stellen. Aufgabe dieser Erfindung war auch, ein Verfahren zur Herstellung von Polyurethanen unter Verwendung dieser Katalysatoren zu entwickeln.

Diese Aufgaben konnten überraschenderweise dadurch gelöst werden, dass als Metallkatalysatoren Zinn-Verbindungen der nachfolgend genannten allgemeinen Formel eingesetzt werden.

Gegenstand der vorliegenden Erfindung ist ein Verfahren zur Herstellung von gegebenenfalls geschäumten Polyurethanen durch Umsetzung von Polyisocyanaten mit organischen Verbindungen mit mindestens zwei gegenüber Isocyanaten aktiven Wasserstoffatomen vom Molekulargewicht 400–10 000 in Gegenwart von Aktivatoren und gegebenenfalls in Gegenwart von Treibmitteln und Kettenverlängerungsmitteln vom Molekulargewicht 32–400 und weiteren an sich bekannten Hilfs- und Zusatzstoffen, dadurch gekennzeichnet, dass man als Aktivatoren Verbindungen der allgemeinen Formel

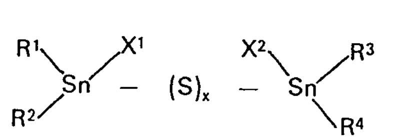

in der
$R^1$, $R^2$, $R^3$, $R^4$ gleich oder verschieden sind und $C_1$–$C_{20}$-Alkyl, $C_5$–$C_7$-Cycloalkyl, $C_6$–$C_{14}$-Aryl oder $C_7$–$C_{30}$-Alkaryl bedeuten,
$X^1$ und $X^2$ gleich oder verschieden sind und für Halogen oder für einen Rest $-OR^5$, $-SR^6$ oder

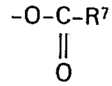

stehen, wobei $X^1$ und $X^2$ nicht gleichzeitig für ein

Halogenatom stehen,
$R^5$, $R^6$, $R^7$ gleich oder verschieden sind und $C_1$–$C_{20}$-Alkyl, $C_5$–$C_7$-Cycloalkyl, $C_6$–$C_{14}$-Aryl oder $C_7$–$C_{30}$-Alkaryl bedeuten und
$x \geqq 1$ ist.

Erfindungsgemäss ist bevorzugt, dass in der allg. Formel $R^1$ und $R^2$ sowie $R^3$ und $R^4$ gleich sind und Halogen ein Chlor-Atom bedeutet.

Ferner ist bevorzugt, dass in der allg. Formel $R^1$–$R^4$ einen $C_1$–$C_{12}$-Alkylrest und $R^5$–$R^7$ einen $C_1$–$C_{20}$-Alkylrest bedeuten. In der Regel werden die Aktivatoren der allg. Formel in einer Menge von 0,05–1 Gew.-%, bevorzugt 0,01–0,5 Gew.-%, bezogen auf die Verbindungen mit mindestens zwei aktiven Wasserstoffatomen vom Molekulargewicht 400–10 000, eingesetzt.

Die Zinnverbindungen der genannten allg. Formel zeichnen sich dadurch aus, dass sie auch in Gegenwart von Wasser und aminischen, amidinischen oder anderen, z.B. basischen Cokatalysatoren ihre Aktivität nicht verlieren. Wasser kann dabei in einer Menge zugegen sein, die einem vielfachen molaren als auch gewichtsmässigen Überschuss, bezogen auf die Zinnverbindung, entspricht.

Gegenstand der Erfindung ist auch ein lagerstabiles Vorprodukt für die Durchführung des erfindungsgemässen Verfahrens, welches dadurch gekennzeichnet ist, dass es

a) eine mindestens zwei gegenüber Isocyanaten reaktive Wasserstoffatome enthaltende organische Verbindung vom Molekulargewicht 400–10 000

b) eine katalytisch aktive Menge eines Aktivators der allgemeinen Formel

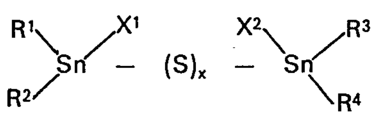

worin
$R^1$–$R^4$, $X^1$, $X^2$ und x wie oben definiert sind, enthält.

Bevorzugt ist ein solches lagerstabiles Vorprodukt welches zusätzlich

a) eine katalytische Menge eines metallischen oder nichtmetallischen Cokatalysators und gegebenenfalls

b) ein Kettenverlängerungsmittel vom Molekulargewicht 32–400,

c) ein Treibmittel,

d) einen Zellstabilisator und gegebenenfalls

e) weitere an sich bekannte Hilfs- und Zusatzstoffe enthält.

Nach einer bevorzugten Ausführungsform des erfindungsgemässen Verfahrens wird das Polyisocyanat mit einem Vorprodukt, wie es oben beschrieben ist, umgesetzt. Schliesslich ist erfindungsgemäss die Herstellung von Schaumstoff-Formteilen mit einer dichten Aussenhaut, die nicht sprunghaft in den Schaumstoffkern übergeht, und einem Schaumstoffkern mit differentiell abnehmender Dichte, deren Minimum etwa in der Mitte des Formteilquerschnitts liegt (Integralschaumstoffe), bevorzugt.

Ausser der Tatsache, dass nunmehr stabile Katalysatoren, die Lösungen konstanter Aktivität ergeben, vorliegen, bietet die Verwendung von Katalysatoren gemäss Erfindung folgende weitere Vorteile:

1. In den erfindungsgemäss verwendeten Katalysatoren liegen zwei, ggf. verschieden substituierte Zinnatome nebeneinander vor. Da, wie die Erfahrung zeigt und dem Fachmann bekannt ist, verschieden substituierte Zinnatome verschiedene katalytische Aktivität aufweisen, kann durch geeignete Substitution der Zinnatome eine «Aktivitätsfeinabstimmung» vorgenommen werden.

2. Sie weisen, verglichen mit den Zinn-Verbindungen nach DE-OS 2 722 658 weitaus bessere Löslichkeit in kurz- und langkettigen Polyolen auf.

3. Die erfindungsgemässen Katalysatoren neigen auch bei niedriger Temperatur nicht zum Ausfallen oder Auskristallisieren.

4. Die Katalysatoren gemäss Erfindung können mit gutem Erfolg auch ohne aminische, amidinische oder anderweitige, z.B. Cokatalyse eingesetzt werden.

5. Unter Verwendung der erfindungsgemässen Katalysatoren hergestellte Integralschäume weisen eine deutlich verringerte Neigung zu Abbläsern und Bodenstörungen sowie eine verbesserte Hautbildung auf.

Die erfindungsgemäss zu verwendenden Aktivatoren, die allg. sog. Distanthiane darstellen, sind an sich bekannt. Sie werden z.B. gemäss folgenden Reaktionsgleichungen hergestellt:

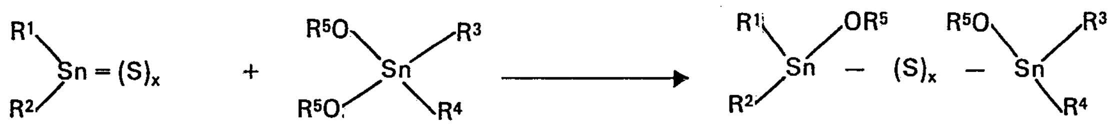

I II III

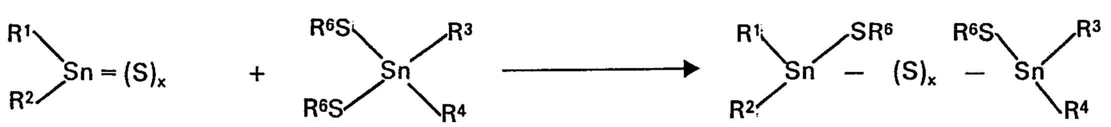

I IV V

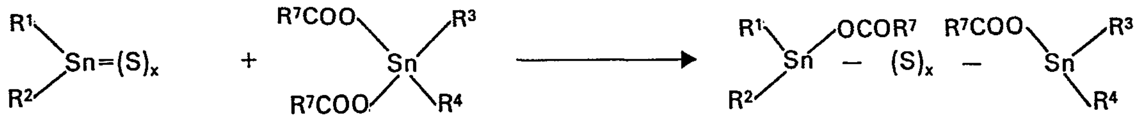

I VI VII

Dialkylzinnsulfide resp. -polysulfide können z.B. durch Umsetzung von Dialkylzinnchloriden mit Schwefelwasserstoff und Hilfsbase oder Dialkylzinnchloriden mit Alkalisulfiden resp. Alkalipolysulfiden hergestellt werden. Anstelle der Dialkylzinnverbindungen können auch die Dicycloalkyl- oder Diaryl-Verbindungen eingesetzt werden. Die Zinnsulfide liegen wahrscheinlich nicht monomer, sondern in Form cyclischer Addukte (vgl. T. Harada, Bull. Chem. Soc. Jap., 17, 283, 1942) vor. Je ein Beispiel für Verbindungen der allg. Formeln III und VII stellen A.G. Davies und P.G. Harrison, J. Organometall Chem., 8, P 19 (1967) vor.

Verbindungen der Formel II werden z.B. durch Umsetzung der entsprechenden Zinnoxide mit Alkanolen, Cycloalkanolen, Phenolen etc. unter Wasserabscheidung, ferner durch Umsetzung der Zinndihalogenide mit den Alkalisalzen der betreffenden Alkanole etc. oder durch Umsetzung mit den Alkanolen etc. in Gegenwart einer Hilfsbase wie z.B. Triethylamin hergestellt.

Verbindungen der Formel IV werden z.B. durch Umsetzung der entsprechenden Zinnoxide mit Alkanthiolen, Cycloalkanthiolen, Thiophenolen etc. unter Wasserabscheidung, ferner durch Umsetzung der Zinndihalogenide mit den Alkalisalzen der entsprechenden Thiolen oder durch Umsetzung mit den Thiolen in Gegenwart einer Hilfsbase hergestellt.

Verbindungen der allg. Formel VI werden z.B. durch Umsetzung der entsprechenden Zinnoxide mit Carbonsäuren unter Wasserabscheidung, ferner durch Umsetzung der Zinndihalogenide mit den Alkalisalzen der entsprechenden Carbonsäuren hergestellt.

Verbindungen der allg. Formeln III, V und VII werden durch Umsetzung der Zinnverbindungen der allg. Formel II, IV und VI mit dem Zinnsulfid der allg. Formel I hergestellt. Diese Umsetzung wird in einem Hydroxylgruppen-freien Solvens wie z.B. Benzol, Toluol, Chlorbenzol, Nitrobenzol, Dioxan, Tetrahydrofuran, Tetrachlormethan, Diethylether, Glykoldimethylether vorgenommen. Bevorzugt ist die Verwendung von Toluol. Sind die Verbindungen der allg. Formel III, IV oder VI oder beide Reaktionspartner bei Raumtemperatur flüssig, so wird bevorzugt ohne Solvens gearbeitet. Die Vereinigung der beiden Reaktionspartner ist exotherm, nach 2 h bei 80°C ist die Reaktion beendet.

Verbindungen der allg. Formeln XI–XIII entstehen durch

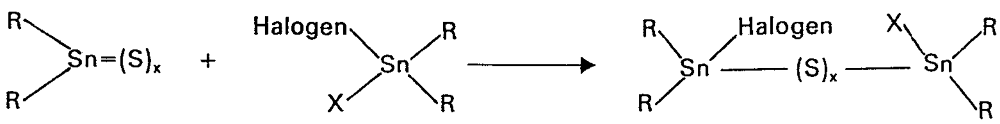

I

VIII: $X=OR^5$
IX: $X=SR^6$
X: $X=OCOR^7$

XI: $X=OR^5$
XII: $X=SR^6$
XIII: $X=OCOR^7$

Umsetzung von Verbindungen der allg. Formeln VIII–X mit einem Zinn(poly)sulfid der allg. Formel I.

Verbindungen der allg. Formel VIII sind z.B. Produkte aus der Reaktion von 1 Mol Dialkyl-, Diaryl-, Dicyclohexyl-, Dialkarylzinndihalogenid mit 1 Mol eines Alkalisalzes einer Alkyl-, Cycloalkyl-, Aryl- oder Alkaryl-Hydroxyverbindung oder entstehen durch Aquilibrierungsreaktion aus z.B. Dialkylzinn-bis (alkoxiden) und Dialkylzinndihalogeniden (A.G. Davies und P.G. Harrison, J. Chem. Soc. (C), 1967, 298).

Verbindungen der Formeln IX und X entstehen auf VIII-analogen Wegen und wurden bereits in der Literatur beschrieben (A.G. Davies und P.G. Harrison, J. Chem. Soc. (C), 1967, 298; A.G. Parker und C.I. Carman, Advances in Chem. Ser., 169, 363, (1978); A. Michel et al., Polymer Degradation and Stability, 2, 277 (1980); T.N. Mitchell, J. Organome.al. Chem., 59, 189 (1973).

Über die Umsetzung der Verbindungen der allg. Formeln VIII–X mit Verbindungen der allg. Formel I gilt das für die Synthese der Verbindungen der allg. Formeln III, V und VII gesagte.

Die Verbindungen der allg. Formeln III, V, VII, XI, XII und XIII sind Flüssigkeiten oder tiefschmelzende Feststoffe, die in allen gängigen org. Lösungsmitteln und in Hydroxylverbindungen, wie sie zur Herstellung von Polyurethankunststoffen Verwendung finden, klar löslich sind. Sie sind geruchlos bzw. weisen nur einen geringen Eigengeruch auf.

Bevorzugt sind Verbindungen der allgemeinen Formel, in denen $R^1$ und $R^2$ sowie $R^3$ und $R^4$ identisch und einen $C_1$–$C_8$-Alkylrest und in denen $R^5$, $R^6$ und $R^7$ einen $C_1$–$C_{12}$-Alkylrest bedeuten. Ist $X^1$ oder $X^2$ ein Halogenatom, so ist Chlor bevorzugt. Weiterhin ist $x = 1$ bevorzugt.

Erfindungsgemäss werden folgende Distanthiane bevorzugt eingesetzt:

1.1.3.3-Tetramethyl-1.3-bis (Oxyethyl)-distanthian
1.1.3.3-Tetra-n-butyl-1.3-bis (oxyethyl)-distanthian
1.1.3.3-Tetra-n-oktyl-1.3-bis (oxyethyl)-distanthian
1.1-Dimethyl-3.3-di-n-butyl-1.3-bis (oxyethyl)-distanthian
1.1-Dimethyl-3.3-di-n-butyl-1.3-bis (oxy-n-butyl)-distanthian
1.1-Dimethyl-3.3-di-n-butyl-1.3-bis (oxy-i-oktyl)-distanthian
1.1.3.3-Tetra-n-butyl-1.3-bis (oxy-i-oktyl)-distanthian
1.1.3.3-Tetramethyl-1.3-bis (thio-n-butyl)-distanthian
1.1.3.3-Tetrabutyl-1.3-bis (thio-n-butyl)-distanthian
1.1.3.3-Tetramethyl-1.3-bis (thiolauryl)-distanthian
1.1.3.3-Tetrabutyl-1.3-bis (thiolauryl)-distanthian
1.1-Dimethyl-3.3-di-n-butyl-1.3-bis (thiolauryl)-distanthian
1.1-Dibutyl-3.3-di-i-oktyl-1.3-bis- (thiolauryl)-distanthian
1.1.3.3-Tetramethyl-1.3-bis (oxycarbonylmethyl)-distanthian
1.1.3.3-Tetra-n-butyl-1.3-bis (oxycarbonylmethyl)-distanthian
1.1-Dimethyl-3.3-di-n-butyl-1.3-bis (oxycarbonylmethyl)-distanthian
1.1-Di-n-butyl-3.3-di-i-oktyl-1.3-bis (oxycarbonylmethyl)-distanthian
1.1.3.3-Tetramethyl-1.3-bis (oxycarbonylheptyl)-distanthian
1.1.3.3-Tetrabutyl-1.3-bis (oxycarbonylhep tyl)-distanthian
1.1-Dimethyl-3.3-di-n-butyl-1.3-bis (oxycarbonylheptyl)-distanthian
1.1-Dimethyl-3.3-di-i-oktyl-1.3-bis (oxycarbonylheptyl)-distanthian
1.1-Dibutyl-3.3-di-i-oktyl-1.3-bis (oxycarbonylheptyl)-distanthian
1.1.3.3-Tetra-i-oktyl-1.3-bis (oxycarbonylheptyl)-distanthian
1.1.3.3-Tetramethyl-1.3-bis (oxycarbonylundecyl)-distanthian
1.1.3.3-Tetra-n-butyl-1.3-bis (oxycarbonylundecyl)-distanthian
1.1.3.3-Tetra-i-oktyl-1.3-bis (oxycarbonylundecyl)-distanthian
1.1-Dimethyl-3.3-di-n-butyl-1.3-bis (oxycarbonylundecyl)-distanthian
1.1-Dimethyl-3.3-di-i-oktyl-1.3-bis (oxycarbonylundecyl)-distanthian
1.1-Dibutyl-3.3-di-i-oktyl-1.3-bis (oxycarbonylundecyl)-distanthian
1.1.3.3-Tetramethyl-1-oxycarbonylmethyl-3-chlor-distanthian
1.1.3.3-Tetra-n-butyl-1-oxycarbonylmethyl-3-chlor-distanthian
1.1-Dimethyl-1-oxycarbonylmethyl-3.3-dibutyl-3-chlor-distanthian
1.1.3.3-Tetramethyl-1-oxycarbonylheptyl-3-chlor-distanthian
1.1.3.3-Tetra-n-butyl-1-oxycarbonylheptyl-3-chlor-distanthian
1.1.3.3-Tetramethyl-1-oxycarbonylundecyl-3-chlor-distanthian
1.1.3.3-Tetra-n-butyl-1-oxycarbonylundecyl-3-chlor-distanthian
1.1-Dimethyl-1-oxycarbonylundecyl-3.3-di-n-butyl-3-chlor-distanthian
1.1-Dimethyl-1-chlor-3.3-di-n-butyl-3-oxycarbonylundecyl-distanthian
1.1-Di-n-butyl-1-oxymethyl-3.3-di-i-oktyl-3-chloro-distanthian
1.1.3.3-Tetra-n-butyl-1-thioundecyl-3-chloro-distanthian

Durch das jeweilige Herstellungsverfahren der Zinnsulfide der allg. Formel I bedingt, können auch Verbindungen entstehen, die einen erhöhten Schwefelgehalt aufweisen. Dies wird auf die Anwesenheit von Polysulfidstrukturen zurückgeführt (x›1).

Zur Senkung des Schmelzpunkts bzw. Erhöhung der Löslichkeit ist es oft bevorzugt, dass als Hydroxy-, Mercapto- oder Carboxylverbindung wie sie zur Herstellung der Verbindungen der allg. Formeln II, IV, VI, VIII, IX und X eingesetzt werden, solche Verbindungen verwendet werden, deren KW-Reste Isomerengemische sind. Durch diese isomeren KW-Reste bedingt, können auch die erfindungsgemäss zu verwendenden Zinnkatalysatoren Isomerengemische darstellen.

Die Aktivatoren gemäss Erfindung können im Regelfall sowohl in den Verbindungen mit mindestens zwei aktiven H-Atomen vom Molekulargewicht 400–10 000 als auch in der Isocyanatkomponente ohne Schwierigkeiten gelöst werden.

Bevorzugt werden sie unter Erwärmen in den Verbindungen mit mindestens zwei aktiven H-Atomen vom Molekulargewicht 400–10 000 gelöst, wobei überraschenderweise keine Reaktion zwischen den Halogenatomen besitzenden Verbindungen der allg. Formeln XI–XIII und dieser Komponente auftritt.

Für die Durchführung des erfindungsgemässen Verfahrens werden eingesetzt:

1. Als Ausgangskomponenten aliphatische, cycloaliphatische, araliphatische, aromatische und heterocyclische Polyisocyanate, wie sie z.B. von W. Siefken in Justus Liebigs Annalen der Chemie, 562, Seiten 75 bis 136, beschrieben werden, beispielsweise solche der Formel

$Q(NCO)_n$

in der
n = 2–4, vorzugsweise 2,
und
Q einen aliphatischen Kohlenwasserstoffrest mit 2–18, vorzugsweise 6–10 C-Atomen,
einen cycloaliphatischen Kohlenwasserstoffrest mit 4–15, vorzugsweise 5–10 C-Atomen,
einen aromatischen Kohlenwasserstoffrest mit 6–15, vorzugsweise 6–13 C-Atomen,

oder einen araliphatischen Kohlenwasserstoffrest mit 8–15, vorzugsweise 8–13 C-Atomen, bedeuten, z.B. Ethylen-diisocyanat, 1,4-Tetramethylendiisocyanat, 1,6-Hexamethylendiisocyanat, 1,12-Dodecandiisocyanat, Cyclobutan-1,3-diisocyanat, Cyclohexan-1,3- und -1,4-diisocyanat sowie beliebige Gemische dieser Isomeren, 1-Isocyanato-3,3,5-trimethyl-5-isocyanatomethyl-cyclohexan (DE-Auslegeschrift 1 202 785, US-Patentschrift 3 401 190), 2,4- und 2,6-Hexahydrotoluylendiisocyanat sowie beliebige Gemische dieser Isomeren, Hexahydro-1,3- und/oder -1,4-phenylendiisocyanat, Perhydro-2,4'- und/oder -4,4'-diphenylmethan-diisocyanat, 1,3- und 1,4-Phenylendiisocyanat, 2,4- und 2,6-Toluylendiisocyanat sowie beliebige Gemische dieser Isomeren, Diphenylmethan-2,4'- und/oder -4,4'-diisocyanat, Naphthylen-1,5-diisocyanat.

Ferner kommen beispielsweise erfindungsgemäss in Frage: Triphenylmethan-4,4',4''-triisocyanat, Polyphenyl-polymethylenpolyisocyanate, wie sie durch Anilin-Formaldehyd -Kondensation und anschliessende Phosgenierung erhalten und z.B. in den GB-Patentschriften 874 430 und 848 671 beschrieben werden, m- und p-Isocyanatophenylsulfonyl-isocyanate gemäss der US-Patentschrift 3 454 606, perchlorierte Arylpolyisocyanate, wie sie z.B. in der DE-Auslegeschrift 1 157 601 (US-Patentschrift 3 277 138) beschrieben werden, Carbodiimidgruppen aufweisende Polyisocyanate, wie sie in der DE-Patentschrift 1 092 007 (US-Patentschrift 3 152 162) sowie in den DE-Offenlegungsschriften 2 504 400, 2 537 685 und 2 552 350 beschrieben werden, Norbornan-Diisocyanate gemäss US-Patentschrift 3 492 330, Allophanatgruppen aufweisende Polyisocyanate, wie sie z.B. in der GB-Patentschrift 994 890, der BE-Patentschrift 761 626 und der NL-Patentanmeldung 7 102 524 beschrieben werden, Isocyanuratgruppen aufweisende Polyisocyanate, wie sie z.B. in der US-Patentschrift 3 001 973, in den DE-Patentschriften 1 022 789, 1 222 067 und 1 027 394 sowie in den DE-Offenlegungsschriften 1 929 034 und 2 004 048 beschrieben werden, Urethangruppen aufweisende Polyisocyanate, wie sie z.B. in der BE-Patentschrift 752 261 oder in den US-Patentschriften 3 394 164 und 3 644 457 beschrieben werden, acylierte Harnstoffgruppen aufweisende Polyisocyanate gemäss der DE-Patentschrift 1 230 778, Biuretgruppen aufweisende Polyisocyanate, wie sie z.B. in den US-Patentschriften 3 124 605, 3 201 372 und 3 124 605 sowie in der GB-Patentschrift 889 050 beschrieben werden, durch Telomerisationsreaktionen hergestellte Polyisocyanate, wie sie z.B. in der US-Patentschrift 3 654 106 beschrieben werden, Estergruppen aufweisende Polyisocyanate, wie sie z.B. in den GB-Patentschriften 965 474 und 1 072 956, in der US-Patentschrift 3 567 763 und in der DE-Patentschrift 1 231 688 genannt werden, Umsetzungsprodukte der obengenannten Isocyanate mit Acetalen gemäss der DE-Patentschrift 1 072 385 und polymere Fettsäureester enthaltende Polyisocyanate gemäss der US-Patentschrift 3 455 883.

Es ist auch möglich, die bei der technischen Isocyanatherstellung anfallenden, Isocyanatgruppen aufweisenden Destillationsrückstände, gegebenenfalls gelöst in einem oder mehreren der vorgenannten Polyisocyanate, einzusetzen. Ferner ist es möglich, beliebige Mischungen der vorgenannten Polyisocyanate zu verwenden.

Besonders bevorzugt werden in der Regel die technisch leicht zugänglichen Polyisocyanate, z.B. das 2,4- und 2,6-Toluylendiisocyanat sowie beliebige Gemische dieser Isomeren («TDI»), Polyphenyl-polymethylen-polyisocyanate, wie sie durch Anilin-Formaldehyd-Kondensation und anschliessende Phosgenierung hergestellt werden («rohes MDI») und Carbodiimidgruppen, Urethangruppen, Allophanatgruppen, Isocyanuratgruppen, Harnstoffgruppen oder Biuretgruppen aufweisenden Polyisocyanate («modifizierte Polyisocyanate»), insbesondere solche modifizierten Polyisocyanate, die sich vom 2,4- und/oder 2,6-Toluylendiisocyanat bzw. vom 4,4'- und/oder 2,4'-Diphenylmethandiisocyanat ableiten.

2. Als Ausgangskomponenten ferner Verbindungen mit mindestens zwei gegenüber Isocyanaten reaktionsfähigen Wasserstoffatomen von einem Molekulargewicht in der Regel von 400–10 000. Hierunter versteht man neben Aminogruppen, Thiolgruppen oder Carboxylgruppen aufweisenden Verbindungen vorzugsweise Hydroxylgruppen aufweisende Verbindungen, insbesondere zwei bis acht Hydroxylgruppen aufweisende Verbindungen, speziell solche vom Molekulargewicht 1000 bis 8000, vorzugsweise 1500 bis 6000, z.B. mindestens zwei, in der Regel 2 bis 8, vorzugsweise aber 2 bis 4, Hydroxylgruppen aufweisende Polyester, Polyether, Polythioether, Polyacetale, Polycarbonate und Polyesteramide, wie sie für die Herstellung von homogenen und von zellförmigen Polyurethanen an sich bekannt sind:

a) Die in Frage kommenden Hydroxylgruppen aufweisenden Polyester sind z.B. Umsetzungsprodukte von mehrwertigen, vorzugsweise zweiwertigen und gegebenenfalls zusätzlich dreiwertigen Alkoholen mit mehrwertigen, vorzugsweise zweiwertigen, Carbonsäuren. Anstelle der freien Polycarbonsäuren können auch die entsprechenden Polycarbonsäureanhydride oder entsprechende Polycarbonsäureester von niedrigen Alkoholen oder deren Gemische zur Herstellung der Polyester verwendet werden. Die Polycarbonsäuren können aliphatischer, cycloaliphatischer, aromatischer und/oder heterocyclischer Natur sein und gegebenenfalls, z.B. durch Halogenatome, substituiert und/oder ungesättigt sein.

Als Beispiele für solche Carbonsäuren und deren Derivate seien genannt:

Bernsteinsäure, Adipinsäure, Korksäure, Azelainsäure, Sebacinsäure, Phthalsäure, Isophthalsäure, Trimellitsäure, Phthalsäureanhydrid, Tetrahydrophthalsäureanhydrid, Hexahydrophthalsäureanhydrid, Tetrachlorphthalsäureanhydrid, Endomethylentetrahydrophthalsäureanhydrid, Glutarsäureanhydrid, Maleinsäure, Maleinsäureanhydrid, Fumarsäure, dimerisierte und trimerisierte ungesättigte Fettsäuren, gegebenenfalls in Mischung mit monomeren ungesättigten Fettsäuren, wie Ölsäure; Terephthalsäuredimethylester und Terephthalsäure-bis-glykolester. Als mehrwertige Alkohole kommen z.B. Ethylenglykol, Propylenglykol-(1,2) und -(1,3), Butylenglykol-(1,4) und -(2,3), Hexandiol-(1,6), Octandiol-(1,8), Neopenthylglykol, 1,4-Bis-hydroxymethylcylohexan, 2-Methyl-1,3-propandiol, Glycerin, Trimethylolpropan, Hexantriol-(1,2,6), Butantriol-(1,2,4), Trimethylolethan, Pentaerythrit, Chinit, Mannit und Sorbit, Dehydromannit und Dehydrosorbit, Formit, Methylglykosid, ferner Diethylenglykol, Triethylenglykol, Tetraethylenglykol und höhere Polyethylenglykole, Dipropylenglykol und höhere Polypropylenglykole sowie Dibutylenglykol und höhere Polybutylenglykole in Frage. Die Polyester können anteilig endständige Carboxylgruppen aufweisen. Auch Polyester aus Lactonen, z.B. ε-Caprolacton, oder aus Hydroxycarbonsäuren, z.B. ω-Hydroxycapronsäure, sind einsetzbar.

b) Auch die erfindungsgemäss in Frage kommenden, mindestens zwei, in der Regel zwei bis acht, vorzugsweise zwei bis drei, Hydroxylgruppen aufweisenden Polyether sind solche der an sich bekannten Art und werden z.B. durch Polymerisation von Epoxiden wie Ethylenoxid, Propylenoxid, Butylenoxid, Tetrahydrofuran, Styroloxid oder Epichlorhydrin mit sich selbst, z.B. in Gegenwart von Lewis-Katalysatoren wie $BF_3$, oder durch Anlagerung dieser Epoxide, vorzugsweise von Ethylenoxid und Propylenoxid, gegebenenfalls im Gemisch oder nacheinander, an Startkomponenten mit reaktionsfähigen Wasserstoffatomen wie Wasser, Alkohole, Ammoniak oder Amine, z.B. Ethylenglykol, Propylenglykol-(1,3) oder -(1,2), Trimethylolpropan, Glycerin, Sorbit, 4,4′-Dihydroxy-diphenylpropan, Anilin, Ethanolamin oder Ethylendiamin hergestellt. Auch Sucrosepolyether, wie sie z.B. in den DE-Auslegeschriften 1 176 358 und 1 064 938 beschrieben werden, sowie auf Formit oder Formose gestartete Polyether (DE-Offenlegungsschriften 2 639 083 bzw. 2 737 951), kommen erfindungsgemäss in Frage. Vielfach sind solche Polyether bevorzugt, die überwiegend (bis zu 90 Gew.-%, bezogen auf alle vorhandenen OH-Gruppen im Polyether) primäre OH-Gruppen aufweisen. Auch OH-Gruppen aufweisende Polybutadiene sind erfindungsgemäss geeignet.

c) Unter den Polythioethern seien insbesondere die Kondensationsprodukte von Thiodiglykol mit sich selbst und/oder mit anderen Glykolen, Dicarbonsäuren, Formaldehyd, Aminocarbonsäuren oder Aminoalkoholen angeführt. Je nach den Co-Komponenten handelt es sich bei den Produkten z.B. um Polythiomischether, Polythioetherester oder Polythioetheresteramide.

d) Als Polyacetale kommen z.B. die aus Glykolen, wie Diethylenglykol, Triethylengklykol, 4,4′-Dioxethoxy-diphenyldimethylmethan, Hexandiol und Formaldehyd herstellbaren Verbindungen in Frage. Auch durch Polymerisation cyclischer Acetale wie z.B. Trioxan (DE-Offenlegungsschrift 1 694 128) lassen sich erfindungsgemäss geeignete Polyacetale herstellen.

e) Als Hydroxylgruppen aufweisende Polycarbonate kommen solche der an sich bekannten Art in Betracht, die z.B. durch Umsetzung von Diolen wie Propandiol-(1,3), Butandiol-(1,4) und/oder Hexandiol-(1,6), Diethylenglykol, Triethylenglykol, Tetraethylenglykol oder Thiodiglykol mit Diarylcarbonaten, z.B. Diphenylcarbonat, oder Phosgen hergestellt werden können (DE-Auslegeschriften 1 694 080, 1 915 908 und 2 221 751; DE-Offenlegungsschrift 2 605 024).

f) Zu den Polyesteramiden und Polyamiden zählen z.B. die aus mehrwertigen gesättigten oder ungesättigten Carbonsäuren bzw. deren Anhydriden und mehrwertigen gesättigten oder ungesättigten Aminoalkoholen, Diaminen, Polyaminen und deren Mischungen gewonnenen, vorwiegend linearen Kondensate.

g) Auch bereits Urethan- oder Harnstoffgruppen enthaltende Polyhydroxylverbindungen sowie gegebenenfalls modifizierte natürliche Polyole, wie Rizinusöl oder Kohlenhydrate, z.B. Stärke, sind verwendbar. Auch Anlagerungsprodukte von Alkylenoxiden an Phenol-Formaldehyd-Harze oder auch an Harnstoff-Formaldehydharze sind erfindungsgemäss einsetzbar.

h) Die genannten Polyhydroxylverbindungen können vor ihrer Verwendung im Polyisocyanat-Polyadditionsverfahren noch in der verschiedensten Weise modifiziert werden: So lässt sich gemäss DE-Offenlegungsschriften 2 210 839 (US-Patentschrift 3 849 515) und 2 544 195 ein Gemisch aus verschiedenen Polyhydroxylverbindungen (z.B. aus einem Polyether- und einem Polyesterpolyol) durch Veretherung in Gegenwart einer starken Säure zu einem höhermolekularen Polyol kondensieren, welches aus über Etherbrücken verbundenen verschiedenen Segmenten aufgebaut ist. Es ist auch möglich, z.B. gemäss DE-Offenlegungsschrift 2 559 372 in die Polyhydroxylverbindungen Amidgruppen oder gemäss DE-Offenlegungsschrift 2 620 487 durch Umsetzung mit polyfunktionellen Cyansäureestern Triazingruppen einzuführen. Durch Umsetzung eines Polyols mit einer weniger als äquivalenten Menge eines Diisocyanatocarbodiimids und anschliessende Reaktion der Carbodiimidgruppe mit einem Amin, Amid, Phosphit oder einer Carbonsäure erhält man Guanidin-, Phosphonoformamidin- bzw. Acylharnstoffgruppen aufweisende Polyhydroxylverbindungen (DE-Offenlegungsschriften 2 714 289, 2 714 292 und 2 714 293). Von besonderem Interesse ist es in manchen Fällen, die höhermolekularen Polyhydroxylverbindungen durch Reaktion mit Isatosäureanhydrid vollständig oder teilweise in die entsprechenden Anthranilsäureester überzuführen, wie es in den DE-Offenlegungsschriften 2 019 432 und 2 619 840 bzw. den US-Patentschriften 3 808 250, 3 975 428 und 4 016 143 beschrieben ist. Man erhält auf diese

Weise höhermolekulare Verbindungen mit endständigen aromatischen Aminogruppen.
Durch Umsetzung von NCO-Prepolymeren mit Hydroxylgruppen aufweisenden Enaminen, Aldiminen oder Ketiminen und anschliessende Hydrolyse erhält man gemäss DE-Offenlegungsschrift 2 546 536 bzw. US-Patentschrift 3 865 791 höhermolekulare, endständige Aminogruppen aufweisende Verbindungen. Weitere Herstellungsverfahren für höhermolekulare Verbindungen mit endständigen Aminogruppen oder Hydrazidgruppen werden in der DE-Offenlegungsschrift 1 694 152 (US-Patentschrift 3 625 871) beschrieben.

i) Erfindungsgemäss können gegebenenfalls auch Polyhydroxylverbindungen eingesetzt werden, in welchen hochmolekulare Polyaddukte bzw. Polykondensate oder Polymerisate in feindisperser oder gelöster Form enthalten sind. Derartige Polyhydroxylverbindungen werden z.B. erhalten, wenn man Polyadditionsreaktionen (z.B. Umsetzungen zwischen Polyisocyanaten und aminofunktionellen Verbindungen) bzw. Polykondensationsreaktionen (z.B. zwischen Formaldehyd und Phenolen und/oder Aminen) in situ in den oben genannten, Hydroxylgruppen aufweisenden Verbindungen ablaufen lässt. Derartige Verfahren sind beispielsweise in den DE-Auslegeschriften 1 168 075 und 1 260 142, sowie den DE-Offenlegungsschriften 2 324 134, 2 423 984, 2 512 385, 2 513 815, 2 550 796, 2 550 797, 2 550 833, 2 550 862, 2 633 293 und 2 639 254 beschrieben. Es ist aber auch möglich, gemäss US-Patentschrift 3 869 413 bzw. DE-Offenlegungsschrift 2 550 860 eine fertige wässrige Polymerdispersion mit einer Polyhydroxylverbindung zu vermischen und anschliessend aus dem Gemisch das Wasser zu entfernen.

Auch durch Vinylpolymerisate modifizierte Polyhydroxylverbindungen, wie sie z.B. durch Polymerisation von Styrol und Acrylnitril in Gegenwart von Polyäthern (US-Patentschriften 3 383 351, 3 304 273, 3 523 093, 3 110 695; DE-Auslegeschrift 1 152 536) oder Polycarbonatpolyolen (DE-Patentschrift 1 769 795; US-Patentschrift 3 637 909) erhalten werden, sind für das erfindungsgemässe Verfahren geeignet. Bei Verwendung von Polyetherpolyolen, welche gemäss den DE-Offenlegungsschriften 2 442 101, 2 644 922 und 2 646 141 durch Pfropfpolymerisation mit Vinylphosphonsäureestern sowie gegebenenfalls (Meth)acrylnitril, (Meth)acrylamid oder OH-funktionellen (Meth)acrylsäureestern modifiziert wurden, erhält man Kunststoffe von besonderer Flammwidrigkeit. Polyhydroxylverbindungen, in welche durch radikalische Pfropfpolymerisation mittels ungesättigter Carbonsäuren sowie gegebenenfalls weiterer olefinisch ungesättigter monomerer Carboxylgruppen eingeführt wurden (DE-Offenlegungsschriften 2 714 291, 2 739 620 und 2 654 746) können mit besonderem Vorteil in Kombination mit mineralischen Füllstoffen eingesetzt werden.

Bei der Verwendung von modifizierten Polyhydroxylverbindungen der oben genannten Art als Ausgangskomponente im Polyisocyanat-Polyadditionsverfahren entstehen in vielen Fällen Polyurethankunststoffe mit wesentlich verbesserten mechanischen Eigenschaften.

Vertreter der genannten erfindungsgemäss zu verwendenden Verbindungen sind z.B. in High Polymers, Vol. XVI, «Polyurethanes, Chemistry and Technology», verfasst von Saunders-Frisch, Interscience Publishers, New York, London, Band I, 1962, Seiten 32–42 und Seiten 44–54 und Band II, 1964, Seiten 5–6 und 198–199, sowie im Kunststoff-Handbuch, Band VII, Vieweg-Höchtlen, Carl-Hanser-Verlag, München, 1966, z.B. auf den Seiten 45–71, beschrieben. Selbstverständlich können Mischungen der obengenannten Verbindungen mit mindestens zwei gegenüber Isocyanaten reaktionsfähigen Wasserstoffatomen mit einem Molekulargewicht von 400–10 000, z.B. Mischungen von Polyethern und Polyestern, eingesetzt werden.

Von besonderem Vorteil ist es dabei in manchen Fällen, niedrigschmelzende und hochschmelzende Polyhydroxylverbindungen miteinander zu kombinieren (DE-Offenlegungsschrift 2 706 297).

3. Gegebenenfalls als Ausgangskomponenten Verbindungen mit mindestens zwei gegenüber Isocyanaten reaktionsfähigen Wasserstoffatomen und einem Molekulargewicht von 32 bis 400, vorzugsweise 62–350. Auch in diesem Fall versteht man hierunter Hydroxylgruppen und/oder Aminogruppen und/oder Thiolgruppen und/oder Carboxylgruppen aufweisende Verbindungen, vorzugsweise Hydroxylgruppen und/oder Aminogruppen aufweisende Verbindungen, die als Kettenverlängerungsmittel oder Vernetzungsmittel dienen. Diese Verbindungen weisen in der Regel 2 bis 8, vorzugsweise 2 bis 4, gegenüber Isocyanaten reaktionsfähige Wasserstoffatome auf.

Auch in diesem Fall können Mischungen von verschiedenen Verbindungen mit mindestens zwei gegenüber Isocyanaten reaktionsfähigen Wasserstoffatomen mit einem Molekulargewicht von 32 bis 400 verwendet werden.

Als Beispiele für derartige Verbindungen seien genannt:

Ethylenglykol, Propylenglykol-(1,2) und -(1,3), Butylenglykol-(1,4) und -(2,3), Pentandiol-(1,5), Hexandiol-(1,6), Octandiol-(1,8), Neopentylglykol, 1,4-Bis-Hydroxymethyl-cyclohexan, 2-Methyl-1,3-propandiol, Dibrombutendiol (US-Patentschrift 3 723 392), Glyzerin, Trimethylolpropan, Hexantriol-(1,2,6), Trimethyloläthan, Pentaerythrit, Chinit, Mannit und Sorbit, Ricinusöl, Diethylenglykol, Triethylenglykol, Tetraethylenglykol, höhere Polyethylenglykole mit einem Molekulargewicht bis 400, Dipropylenglykol, höhere Polypropylenglykole mit einem Molekulargewicht bis 400, Dibutylenglykol, höhere Polybutylenglykole mit einem Molekulargewicht bis 400, 4,4′-Dihydroxy-diphenylpropan, di-hydroxymethyl-hydrochinon, Ethanolamin, Diethanolamin, N-Methyl-diethanolamin, Triethanolamin und 3-Aminopropanol.

Als niedermolekulare Polyole kommen erfindungsgemäss auch die Gemische von Hydroxyaldehyden und Hydroxyketonen («Formose») bzw. die hieraus durch Reduktion erhaltenen mehrwertigen Alkohole («Formit») in Frage, wie sie bei der Selbstkondensation von Formaldehydhydrat in Gegenwart von Metallverbindungen als Katalysator und von zur Endiolbildung befähigten Verbindungen als Co-Katalysator entstehen (DE-Offenlegungsschriften 2 639 084, 2 714 084, 2 714 104, 2 721 186, 2 738 154 und 2 738 512). Um Kunststoffe mit verbesserter Flammwidrigkeit zu erhalten, setzt man diese Formosen mit Vorteil in Kombination mit Aminoplastbildnern und/oder Phosphiten ein (DE-Offenlegungsschriften 2 738 513 und 2 738 532). Auch Lösungen von Polyisocyanatpolyadditionsprodukten, insbesondere von ionische Gruppen aufweisenden Polyurethanharnstoffen und/oder von Polyhydrazodicarbonamiden, in niedermolekularen, mehrwertigen Alkoholen kommen erfindungsgemäss als Polyolkomponente in Betracht (DE-Offenlegungsschrift 2 638 759).

Erfindungsgemäss geeignete aliphatische Diamine sind beispielsweise Ethylendiamin, 1,4-Tetramethylendiamin, 1,11-Undecamethylendiamin, 1,12-Dodecamethylendiamin sowie deren Gemische, 1-Amino-3,3,5-trimethyl-5-aminomethylcyclohexan («Isophorondiamin»), 2,4- und 2,6-Hexahydrotoluylendiamin sowie deren Gemische, Perhydro-2,4′- und 4,4′-diaminodiphenylmethan, p-Xylylendiamin, Bis-(3-aminopropyl)-methylamin, Diamino-perhydroanthrazene (DE-Offenlegungsschrift 2 638 731) und cycloaliphatische Triamine gemäss DE-Offenlegungsschrift 2 614 244. Auch Hydrazin und substituierte Hydrazine, z.B. Methylhydrazin, N,N′-Dimethylhydrazin und deren Homologe sowie Säuredihydrazide kommen erfindungsgemäss in Betracht, z.B. Carbodihydrazid, Oxalsäuredihydrazid, die Dihydrazide von Malonsäure, Bernsteinsäure, Glutarsäure, Adipinsäure, β-Methyladipinsäure, Sebazinsäure, Hydracrylsäure und Terephthalsäure; Semicarbazido-alkylen-hydrazide wie z.B. β-Semicarbazidopropionsäurehydrazid (DE-Offenlegungsschrift 1 770 591), Semicarbazido-alkylencarbazinester wie z.B. 2-Semicarbazidoethyl-carbazinester (DE-Offenlegungsschrift 1 918 504) oder auch Amino-semicarbazid-Verbindungen wie z.B. β-Aminoethyl-semicarbazido-carbonat (DE-Offenlegungsschrift 1 902 931). Zur Steuerung ihrer Reaktivität können die Aminogruppen ganz oder teilweise durch Aldimin- bzw. Ketimin-Gruppen blockiert sein (US-Patentschrift 3 734 894; DE-Offenlegungsschrift 2 637 115).

Als Beispiele für aromatische Diamine seien Bisanthranilsäureester gemäss den DE-Offenlegungsschriften 2 040 644 und 2 160 590, 3,5- und 2,4-Diaminobenzoesäureester gemäss DE-Offenlegungsschrift 2 025 900, die in den DE-Offenlegungsschriften 1 803 635 (US-Patentschriften 3 681 290 und 3 736 350), 2 040 650 und 2 160 589 beschriebenen estergruppenhaltigen Diamine, die Ethergruppen aufweisenden Diamine gemäss DE-Offenlegungsschriften 1 770 525 und 1 809 172 (US-Patentschriften 3 654 364 und 3 736 295), gegebenenfalls in 5-Stellung substituierte 2-Halogen-1,3-Phenylendiamine (DE-Offenlegungsschriften 2 001 772, 2 025 896 und 2 065 869), 3,3′-Dichlor-4,4′-diamino-diphenylmethan, Toluylendiamin, 4,4′-Diaminodiphenylmethan, 4,4′-Diaminodiphenyldisulfide (DE-Offenlegungsschrift 2 404 976), Diaminodiphenyldithioäther (DE-Offenlegungsschrift 2 509 404), durch Alkylthiogruppen substituierte aromatische Diamine (DE-Offenlegungschrift 2 638 760), Diaminobenzolphosphonsäureester (DE-Offenlegungsschrift 2 459 491), Sulfonat- oder Carboxylatgruppen enthaltende aromatische Diamine (DE-Offenlegungsschrift 2 720 166) sowie die in der DE-Offenlegungsschrift 2 635 400 aufgeführten hochschmelzenden Diamine genannt. Beispiele für aliphatisch-aromatische Diamine sind die Aminoalkylthioaniline gemäss DE-Offenlegungsschrift 2 734 574.

Als Kettenverlängerungsmittel können erfindungsgemäss auch Verbindungen wie 1-Mercapto-3-aminopropan, gegebenenfalls substituierte Aminosäuren, z.B. Glycin, Alanin, Valin, Serin und Lysin sowie gegebenenfalls substituierte Dicarbonsäuren, beispielsweise Bernsteinsäure, Adipinsäure, Phthalsäure, 4-Hydroxyphthalsäure und 4-Aminopthalsäure verwendet werden.

Ferner können gegenüber Isocyanaten monofunktionelle Verbindungen in Anteilen von 0,01 bis 10 Gew.-%, bezogen auf Polyurethanfeststoff, als sogenannte Kettenabbrecher mitverwendet werden. Derartige monofunktionelle Verbindungen sind z.B. Monoamine wie Butyl- und Dibutylamin, Octylamin, Stearylamin, N-methylstearylamin, Pyrrolidin, Piperidin und Cyclohexylamin, Monoalkohole wie Butanol, 2-Äthylhexanol, Octanol, Dodecanol, die verschiedenen Amylalkohole, Cyclohexanol, Ethylenglykolmonoethylether.

5. Gegebenenfalls als Hilfs- und Zusatzmittel:

a) Wasser und/oder leicht flüchtige anorganische oder organische Substanzen als Treibmittel. Als organische Treibmittel kommen z.B. Aceton, Ethylacetat, halogensubstituierte Alkane wie Methylenchlorid, Chloroform, Äthylidenchlorid, Vinylidenchlorid, Monofluortrichlormethan, Chlordifluormethan, Dichlordifluormethan, ferner Butan, Hexan, Heptan oder Diethylether, als anorganische Treibmittel z.B. Luft, $CO_2$ oder $N_2O$, in Frage. Eine Treibwirkung kann auch durch Zusatz von bei Temperaturen über Raumtemperatur unter Abspaltung von Gasen, beispielsweise von Stickstoff, sich zersetzenden Verbindungen, z.B. Azoverbindungen wie Azodicarbonamid oder Azoisobuttersäurenitril, erzielt werden. Weitere Beispiele für Treibmittel sowie Einzelheiten über die Verwendung von Treibmitteln sind im Kunststoff-Handbuch, Band VII, herausgegeben von Vieweg und Höchtlen, Carl-Hanser-Verlag, München 1966, z.B. auf den Seiten 108 und 109, 453 bis 455 und 507 bis 510 beschrieben.

b) Co-Katalysatoren der an sich bekannten Art, z.B. tertiäre Amine, wie Triethylamin, Tributylamin, N-Methyl-morpholin, N-Ethyl-morpholin, N,N,N',N'-Tetramethyl-ethylendiamin, Pentamethyl-diethylentriamin und höhere Homologe (DE-Offenlegungsschriften 2 624 527 und 2 624 528) 1,4-Diazabicyclo-(2,2,2)-octan, N-Methyl-N'-dimethylaminoethyl-piperazin, Bis-(dimethylaminoalkyl)-piperazine (DE-Offenlegungsschrift 2 636 787), N,N-Dimethylbenzylamin, N,N-Dimethylcyclohexylamin, N,N-Diäthylbenzylamin, Bis-(N,N-diethylaminoethyl)-adipat, N,N,N',N'-Tetramethyl-1,3-butandiamin, N,N-Dimethyl-β-phenylethylamin, 1,2-Dimethylimidazol, 2-Methylimidazol, monocyclische und bicyclische Amidine (DE-Offenlegungsschrift 1 720 633), Bis-(dialkylamino)alkyl-ether, (US-Patentschrift 3 330 782, DE-Auslegeschrift 1 030 558, DE-Offenlegungsschriften 1 804 361 und 2 618 280) sowie Amidgruppen (vorzugsweise Formamidgruppen) aufweisende tertiäre Amine gemäss den DE-Offenlegungsschriften 2 523 633 und 2 732 292. Als Katalysatoren kommen auch an sich bekannte Mannichbasen aus sekundären Aminen, wie Dimethylamin, und Aldehyden, vorzugsweise Formaldehyd, oder Ketonen wie Aceton, Methyläthylketon oder Cyclohexanon und Phenolen, wie Phenol, Nonylphenol oder Bisphenol, in Frage.

Gegenüber Isocyanatgruppen aktive Wasserstoffatome aufweisende tertiäre Amine als Co-Katalysator sind z.B. Triethanolamin, Triisopropanolamin, N-Methyl-diethanolamin, N-Ethyl-diethanolamin, N,N-Dimethyl-ethanolamin, deren Umsetzungsprodukte mit Alkylenoxiden wie Propylenoxid und/oder Ethylenoxid sowie sekundär-tertiäre Amine gemäss DE-Offenlegungsschrift 2 732 292.

Als Co-Katalysatoren kommen ferne Silaamine mit Kohlenstoff-Silizium-Bindungen, wie sie z.B. in der DE-Patentschrift 1 229 290 (entsprechend der US-Patentschrift 3 620 984) beschrieben sind, in Frage, z.B. 2,2,4-Trimethyl-2-silamorpholin und 1,3-Diethylaminomethyl-tetramethyl-disiloxan.

Als Co-Katalysatoren kommen auch stickstoffhaltige Basen wie Tetraalkylammoniumhydroxide, ferner Alkalihydroxide wie Natriumhydroxid, Alkaliphenolate wie Natriumphenolat oder Alkalialkoholate wie Natriummethylat in Betracht. Auch Hexahydrotriazine können als Katalysatoren eingesetzt werden (DE-Offenlegungsschrift 1 769 043).

Die Reaktion zwischen NCO-Gruppen und Zerewitinoffaktiven Wasserstoffatomen wird auch durch Lactame und Azalactame stark beschleunigt, wobei sich zunächst ein Assoziat zwischen dem Lactam und der Verbindung mit acidem Wasserstoff ausbildet. Derartige Assoziate und ihre katalytische Wirkung werden in den DE-Offenlegungsschriften 2 062 288, 2 062 289, 2 117 576 (US-Patentschrift 3 758 444), 2 129 198, 2 330 175 und 2 330 211 beschrieben.

Erfindungsgemäss können auch organische Metallverbindungen, insbesondere organische Zinnverbindungen mit einer anderen Struktur, als sie die erfindungsgemäss zwingend zu verwendenden Zinnverbindungen aufweisen, als Co-Katalysatoren, verwendet werden. Als organische Zinnverbindungen kommen neben schwefelhaltigen Verbindungen wie Di-n-octyl-zinn-mercaptid (DE-Auslegeschrift 1 769 367; US-Patentschrift 3 645 927) vorzugsweise Zinn(II)-salze von Carbonsäuren wie Zinn(II)-acetat, Zinn(II)-octoat, Zinn(II)-äthylhexoat und Zinn(II)-laurat und die Zinn(IV)-Verbindungen, z.B. Dibutylzinnoxid, Dibutylzinndichlorid, Dibutylzinndiacetat, Dibutylzinndilaurat, Dibutylzinnmaleat oder Dioctylzinndiacetat in Betracht.

Selbstverständlich können alle obengenannten Co-Katalysatoren als Gemische eingesetzt werden. Von besonderem Interesse sind dabei Kombinationen aus organischen Metallverbindungen und Amidinen, Aminopyridinen oder Hydrazinopyridinen (DE-Offenlegungsschriften 2 434 185, 2 601 082 und 2 603 834).

Weitere Vertreter von erfindungsgemäss zu verwendenden Katalysatoren sowie Einzelheiten über die Wirkungsweise der Katalysatoren sind im Kunststoff-Handbuch, Band VII, herausgegeben von Vieweg und Höchtlen, Carl-Hanser-Verlag, München 1966, z.B. auf den Seiten 96 bis 102 beschrieben.

Die Co-Katalysatoren werden in der Regel in einer Menge zwischen etwa 0,001 und 10 Gew.-%, bezogen auf die Gesamtmenge an Verbindungen mit mindestens zwei gegenüber Isocyanaten reaktionsfähigen Wasserstoffatomen, eingesetzt.

c) Oberflächenaktive Zusatzstoffe, wie Emulgatoren und Schaumstabilisatoren. Als Emulgatoren kommen z.B. die Natriumsalze von Ricinusöl-sulfonaten oder Salze von Fettsäuren mit Aminen wie ölsaures Diethylamin oder stearinsaures Diethanolamin in Frage. Auch Alkali- oder Ammoniumsalze von Sulfonsäuren wie etwa von Dodecylbenzolsulfonsäure oder Dinaphthylmethandisulfonsäure oder von Fettsäuren wie Ricinolsäure oder von polymeren Fettsäuren können als oberflächenaktive Zusatzstoffe mitverwendet werden.

Als Schaumstabilisatoren kommen vor allem Polyäthersiloxane, speziell wasserlösliche Vertreter, in Frage. Diese Verbindungen sind im allgemeinen so aufgebaut, dass ein Copolymerisat aus Ethylenoxid und Propylenoxid mit einem Polydimethylsiloxanrest verbunden ist. Derartige Schaumstabilisatoren sind z.B. in den US-Patentschriften 2 834 748, 2 917 480 und 3 629 308 beschrieben. Von besonderem Interesse sind vielfach über Allophanatgruppen verzweigte Polysiloxan-Polyoxyalkylen-Copolymere gemäss DE-Offenlegungsschrift 2 558 523.

d) Reaktionsverzögerer, z.B. sauer reagierende Stoffe wie Salzsäure oder organische Säurehalogenide, ferner Zellregler der an sich bekannten Art wie Paraffine oder Fettalkohole oder Dimethylpolysiloxane sowie Pigmente oder Farbstoffe

und Flammschutzmittel der an sich bekannten Art, z.B. Tris-chlorethylphosphat, Trikresylphosphat oder Ammoniumphosphat und -polyphosphat, ferner Stabilisatoren gegen Alterungs- und Witterungseinflüsse, Weichmacher und fungistatisch und bakteriostatisch wirkende Substanzen sowie Füllstoffe wie Bariumsulfat, Kieselgur, Russ oder Schlämmkreide.

Weitere Beispiele von gegebenenfalls erfindungsgemäss mitzuverwendenden oberflächenaktiven Zusatzstoffen und Schaumstabilisatoren sowie Zellreglern, Reaktionsverzögerern, Stabilisatoren, flammhemmenden Substanzen, Weichmachern,Farbstoffen und Füllstoffen sowie fungistatisch und bakteriostatisch wirksamen Substanzen sowie Einzelheiten über Verwendungs- und Wirkungsweise dieser Zusatzmittel sind im Kunststoff-Handbuch, Band VII, herausgegeben von Vieweg und Höchtlen, Carl-Hanser-Verlag, München 1966, z.B. auf den Seiten 103 bis 113 beschrieben.

Durchführung des erfindungsgemässen Verfahrens:

Die Reaktionskomponenten werden erfindungsgemäss nach dem an sich bekannten Einstufenverfahren, dem Prepolymerverfahren oder dem Semiprepolymerverfahren zur Umsetzung gebracht, wobei man sich oft maschineller Einrichtungen bedient, z.B. solcher, die in der US-Patentschrift 2 764 565 beschrieben werden. Einzelheiten über Verarbeitungseinrichtungen, die auch erfindungsgemäss in Frage kommen, werden im Kunststoff-Handbuch, Band VII, herausgegeben von Vieweg und Höchtlen, Carl-Hanser-Verlag, München 1966, z.B. auf den Seiten 121 bis 205 beschrieben.

Bei der Schaumstoffherstellung kann erfindungsgemäss die Verschäumung auch in geschlossenen Formen durchgeführt werden. Dabei wird das Reaktionsgemisch in eine Form eingetragen. Als Formmaterial kommt Metall, z.B. Aluminium, oder Kunststoff, z.B. Epoxidharz, in Frage. In der Form schäumt das schäumfähige Reaktionsgemisch auf und bildet den Formkörper. Die Formverschäumung kann dabei so durchgeführt werden, dass das Formteil an seiner Oberfläche Zellstruktur aufweist, sie kann aber auch so durchgeführt werden, dass das Formteil eine kompakte Haut und einen zelligen Kern aufweist. Erfindungsgemäss kann man in diesem Zusammenhang so vorgehen, dass man in die Form so viel schäumfähiges Reaktionsgemisch einträgt, dass der gebildete Schaumstoff die Form gerade ausfüllt. Man kann aber auch so arbeiten, das man mehr schäumfähiges Reaktionsgemisch in die Form einträgt, als zur Ausfüllung des Forminneren mit Schaumstoff notwendig ist. Im letztgenannten Fall wird somit unter «overcharging» gearbeitet; eine derartige Verfahrensweise ist z.B. aus den US-Patentschriften 3 178 490 und 3 182 104 bekannt. Die Herstellung von Integralschaumstoffen, d.h. von solchen Schaumstoff-Formteilen mit einer dichten Aussenhaut, die nicht sprunghaft in den Schaumstoffkern übergeht, und einem Schaumstoffkern mit differentiell abnehmender Dichte, deren Minimum etwa in der Mitte der Formteilquerschnitts liegt, wird in der DE-AS 1 694 138 beschrieben.

Bei der Formverschäumung werden vielfach an sich bekannte «äussere Trennmittel», wie Siliconöle, mitverwendet. Man kann aber auch sogenannte «innere Trennmittel», gegebenenfalls im Gemisch mit äusseren Trennmitteln, verwenden, wie sie z.B. aus den DE-Offenlegungsschriften 2 121 670 und 2 307 589 bekanntgeworden sind.

Erfindungsgemäss lassen sich auch kalthärtende Schaumstoffe herstellen (vgl. GB-Patentschrift 1 162 517, DE-Offenlegungsschrift 2 153 086).

Selbstverständlich können aber auch Schaumstoffe durch Blockverschäumung oder nach dem an sich bekannten Doppeltransportbandverfahren hergestellt werden.

Die nach der Erfindung erhältlichen Produkte finden z.B. folgende Anwendung:

als Schuhsohlen, Autolenkräder, Armstützen, Kopfstützen, Polstermaterial, Schalldämmstoffe, Beschichtungsmittel, Verpackungsmaterial, Matratzen.

Beispiele

Als Ausgangsmaterial wurden verwendet:

Polyole

Polyol A: Trifunktionelles, auf Trimethylolpropan gestartetes PO/EO-Polyetherpolyol mit einer OH-Zahl von 28.

Polyol B: Trifunktionelles, auf Trimethylolpropan gestartetes PO-Polyetherpolyol mit einer OH-Zahl von 865.

Polyol C: Difunktionelles, auf Propylenglykol gestartetes Po7eO-Polyetherpolyol mit einer OH-Zahl von 28.

Polyol D: Trifunktionelles, auf Trimethylolpropan gestartetes PO/EO-Polyetherpolyol mit einer OH-Zahl von 35.

Polyol E: Trifunktionelles, auf Trimethylolpropan gestartetes PO-Polyetherpolyol mit einer OH-Zahl von 550.

Polyisocyanate

Isocyanat A: Semi-Prepolymer aus 4,4-Diisocyanatodiphenylmethan und Tripropylenglykol mit einem NCO-Gehalt von 22,8%.

Isocyanat B: Semi-Prepolymer aus Isophorondiisocyanat und einem auf Glyzerin gestarteten Polypropylenglykolether (OH-Zahl 670) mit einem NCO-Gehalt von 28%.

An erfindungsgemässen Katalysatoren wurden verwendet:

Katalysator A: durch Umsetzung von Dimethylzinnsulfid und Dibutylzinndilaurat hergestellt.

Katalysator B: durch Umsetzung von Dimethylzinnsulfid und Dibutylzinn-bis(thiododecyl) hergestellt.

Katalysator C: durch Umsetzung von Dibutylzinnsulfid und Dibutylzinn-bis(thiododecyl) hergestellt.
Katalysator D: durch Umsetzung von Dibutylzinnsulfid und Dibutylzinndilaurat hergestellt.
Katalysator E: durch Umsetzung von Dimethylzinnsulfid mit Di-n-octylzinn-di(thiglykolsäure-i-octylester) hergestellt.
Katalysator F: durch Umsetzung von Dibutylzinnsulfid mit Di-n-octylzinn-di(thiglykolsäure-i-octylester) hergestellt.
Die Katalysatoren A–F sind sämtlich bei 20°C flüssig. Die in den Ausführungsbeispielen aufgeführten Reaktionszeiten sind folgendermassen definiert:

$T_1$ = Startzeit (Zeit in sec. nach der Einrührung der Isocyanatkomponente, bei der das Gemisch zu schäumen beginnt);
$T_2$ = Steigzeit (Zeit in sec. nach der Einrührung der Isocyanatkomponente, nach der der Steigvorgang beendet ist);
$T_3$ = Klebfreizeit (Zeit in sec. nach der Einrührung der Isocyanatkomponente, nach der die Oberfläche des Schaums nicht mehr klebrig ist);
$T_4$ = Zupfzeit (Zeit in sec. nach der Einrührung der Isocyanatkomponente, nach der es nicht mehr möglich ist, kleine Stücke mit den Fingern aus dem Schaum zu reissen).

Alle nachfolgend angegebenen Teile sind Gewichtsteile, soweit nicht anders vermerkt.

Beispiel 1:
Lagerstabilitäten der erfindungsgemäss einzusetzenden Distanthian-Katalysatoren (Tabelle 1)
A-Komponente:

950 Tle Polyol A
250 Tle Ethylenglykol
20 Tle Polyol B
20 Tle Emulgator (langkettiges Alkylsulfonat)
Metallkatalysator (Tabelle 1)
Diazabicyclooctan (Tabelle 1)

Der Wassergehalt der A-Komponente wurde durch Bestimmung nach Karl Fischer erhalten. Er betrug 0,15%.

B-Komponente:

950 Tle Isocyanat A
50 Tle Dichlormethan

Die Bestandteile der A-Komponente wurden bei Raumtemperatur mit einem Schnellrührer 60 sec. intensiv miteinander vermischt und das Gemisch 21 d bei 50°C unter Luftzutritt gelagert. Danach wurde die A-Komponente unter gleichen Bedingungen bei Raumtemperatur gelagert. Unmittelbar nach der Zubereitung der A-Komponente und in regelmässigen Abständen danach wurden 100 Tle der A-Komponente mit 146 Tlen der B-Komponente verschäumt und der Zustand des Schaums visuell beurteilt.

Tabelle 1

| Metallkatalysator (Menge)<br>Cokatalysator (Menge) | | 0 d | 7 d | 21 d | 60 d | 120 d |
|---|---|---|---|---|---|---|
| | T 1 | 16 | 18 | 20 | 24 | 31 |
| Dibutylzinndilaurat (0,05 g) | T 2 | 24 | 26 | 26 | 30 | 44 |
| Diazabicyclooctan (0,05 g) | T 3 | 24 | 26 | 26 | 30 | 44 |
| (Vergleich) | T 4 | 24 | 26 | 26 | 30 | 44 |
| | T 1 | 30 | 33 | 34 | | |
| Dibutylzinn-bis-(thiododecyl) | T 2 | 52 | 48 | 43 | | |
| Diazabicyclooctan (0,02 g) | T 3 | 52 | 48 | 43 | | |
| (Vergleich) | T 4 | 52 | 48 | 43 | | |
| | T 1 | 35 | 53 | - | | |
| Bleioctoat (0,08 g) | T 2 | 49 | 74 | - | | |
| Diazabicyclooctan (0,02 g) | T 3 | 49 | 74 | - | | |
| (Vergleich) | T 4 | 49 | 74 | - | | |
| | T 1 | 17 | 53 (4 d) | - | | |
| Bismutoctoat (0,2 g) | T 2 | 26 | 85 (4 d) | - | | |
| Diazabicyclooctan (0,05 g) | T 3 | 26 | 85 (4 d) | - | | |
| (Vergleich) | T 4 | 130 | > 3 min (4 d) | - | | |
| | T 1 | 20 | 20 | 17 | 21 | 22 |
| Katalysator A (0,05 g) | T 2 | 25 | 27 | 25 | 27 | 28 |
| Diazabicyclooctan (0,05 g) | T 3 | 25 | 27 | 25 | 27 | 28 |
| | T 4 | 25 | 27 | 25 | 27 | 28 |
| | T 1 | 15 | 15 | 15 | 16 | 15 |
| Katalysator B (0,07 g) | T 2 | 17 | 20 | 20 | 19 | 20 |
| Diazabicyclooctan (0,05 g) | T 3 | 17 | 20 | 20 | 19 | 20 |
| | T 4 | 17 | 20 | 20 | 19 | 20 |

Tabelle 1 (Fortsetzung)

| Metallkatalysator (Menge) Cokatalysator (Menge) | | 0 d | 7 d | 21 d | 60 d | 120 d |
|---|---|---|---|---|---|---|
| | T 1 | 20 | 19 | 18 | 19 | 20 |
| Katalysator (0,02 g) | T 2 | 27 | 27 | 26 | 26 | 27 |
| Diazabicyclooctan (0,02 g) | T 3 | 27 | 27 | 26 | 26 | 27 |
| | T 4 | 27 | 27 | 26 | 26 | 27 |
| | T 1 | 16 | 16 | 16 | 17 | 17 |
| Katalysator (0,02 g) | T 2 | 25 | 24 | 22 | 24 | 24 |
| Diazabicyclooctan (0,02 g) | T 3 | 25 | 24 | 22 | 24 | 24 |
| | T 4 | 25 | 24 | 22 | 24 | 24 |

Beispiel 2:

Herstellung von halbhartem Integralschaum

Rezeptur

A-Komponente
70 g Polyol C
20 g Polyol D
1 g Ethylenglykol
14 g Butandiol-1.4
12 g Trichlorfluormethan
0,02 g Katalysator A
0,3 g Triethylendiamin (Dabco®)
B-Komponente
74 g Isocyanat A

Die Bestandteile der A-Komponente werden bei Raumtemperatur zusammengegeben, mit einem hochtourigen Schnellrührer 30 sec. intensiv vermischt, mit der angegebenen Menge an B-Komponente versetzt, weitere 10 sec. bei Raumtemperatur intensiv vermischt und dann in einem Freischaumpäckchen verschäumt.

Es wurden folgende Reaktionszeiten gefunden:

$T_1 = 16 \pm 3$ sec., $T_2 = 25 \pm 3$ sec., $T_3 = 25 \pm 3$ sec., $T_4 = 25 \pm 3$ sec.

Der sehr feinporige Schaum weist eine glatte Oberfläche auf.

Beispiel 3:

Herstellung von halbhartem Integralschaum

Verwendung der Katalysatoren gemäss Erfindung ohne Cokatalyse

Rezeptur

A-Komponente
90 g Polyol A
17 g Ethylenglykol
4 g Polyol D
1 g Russ
x g erfindungsgemässer Katalysator

B-Komponente
95 g Isocyanat A
5 g Methylenchlorid

Verschäumungsverhältnis: 100 g A-Komponente/109 g B-Komponente
Kennzahl: 105

Verschäumungstemperatur: 23°C
Rohstoffkomponententemperatur: 23°C

Die Bestandteile der A-Komponente werden bei Raumtemperatur zusammengegeben, mit einem hochtourigen Schnellrührer 30 sec. intensiv vermischt, mit der angegebenen Menge an vorher hergestellter B-Komponente versetzt, weitere 10 sec. vermischt und dann in einem 650 ml Pappbecher verschäumt.

Die erhaltenen Daten sind in Tabelle 2 aufgeführt.

Tabelle 2: Daten aus Beispiel 3

| | Beispiel 3.1 | Beispiel 3.2 | Beispiel 3.3 | Beispiel 3.4 | Beispiel 3.5 | Beispiel 3.6 |
|---|---|---|---|---|---|---|
| Katalysator | A | B | C | D | E | F |
| Katalysatormenge (g) | 0,1 | 0,15 | 0,20 | 0,20 | 1,10 | 2,00 |
| Startzeit (sec. ± 3) | 15 | 15 | 14 | 18 | 18 | 20 |
| Steigzeit (sec. ± 3) | 20 | 18 | 18 | 23 | 23 | 24 |
| Abbindezeit (sec. ± 3) | 19 | 17 | 16 | 21 | 21 | 23 |
| Raumgewicht (g/l) | 585 | 508 | 291 | 303 | 470 | 354 |

Trägt man das Gemisch aus Isocyanat- und Polyolkomponente in eine geschlossene, auf 60°C temperierte Metallform des Masses 20 × 20 × 1 cm ein, so erstarrt das aufgeschäumte Material unter Verdichtung und es werden Teile mit einer Integralstruktur mit verdichteter, kompakter Aussenhaut erhalten.

Beispiel 4:
Herstellung von hartem Integralschaum
A-Komponente:

100 Gew.-Teile eines Polyolgemisches der OH-Zahl 946 und einer Viskosität bei 25°C von 4300 mPa.s, bestehend aus 95 Gew.-Teilen eines Polyethers der OH-Zahl 900, der durch Addition von Propylenoxid an Trimethylolpropan erhalten wurde, und 5 Gew.-Teilen Ethylenglykol, 3 Gew.-Teilen eines Polysiloxan-Polyalkylenoxid-Blockcopolymerisats als Schaumstabilisator, 1 Gew.-Teil 1-Cyclohexyl-2-methyl-tetrahydropyrimidin und der entsprechende erfindungsgemässe Sn-Katalysator als Katalysatorenpaar, 10 Gew.-Teile Monofluortrichlormethan als Treibmittel.

B-Komponente:

277 Gew.-Teile eines aliphatischen Polyisocyanates, das erhalten wurde durch Umsetzung von 7,74 Mol eines Polyols, gebildet aus Trimethylolpropan und Propylenoxid OH-Zahl 378 und 1,47 Mol eines Polyesters, gebildet aus Rizinusöl und Cyclohexanonformaldehydkondensat, OHZ 165, mit 121,9 Mol 1-Isocyanato-3,3,5-trimethyl-5-isocyanatomethyl-cyclohexan (Isophorondiisocyanat), das einen Gesamt-NCO-Gehalt von 28,2% und eine Viskosität von 120 mPa.s aufweist.

Polyolgemisch und Polyisocyanat werden mit Hilfe eines Zweikomponentendosiermischgerätes vermischt und in eine geschlossene, auf 90°C temperierte Metallform eingetragen, in der das Gemisch aufschäumt und unter Verdichtung erstarrt. Nach 5 Minuten wird das Formteil der Form entnommen. Das Formteil hat eine Gesamtrohdichte von 0,6 g/cm³ und eine allseitig geschlossene, kompakte Haut. Die Formteildicke beträgt 10 mm.

Tabelle 3 enthält die Reaktionszeit des Schaumgemisches (jeweils ± 3 sec.) die Wärmebiegewerte der 10 mm dicken Formteile, die mit 0,5 Tln Sn-Katalysator hergestellt wurden, und die Oberflächenhärte.

Tabelle 3

| | Reaktionszeiten (0,32 Tle Katalysator) | Reaktionszeiten (0,5 Tle Katalysator) | Wärmebiegefestigkeit 10* nach DIN 53432 | Oberflächenhärte Shore D nach DIN 53505 |
|---|---|---|---|---|
| Katalysator A | 13/24 | 11/22 | 109°C | 75 |
| Katalysator D | 13/26 | 8/11 | 110°C | 77 |
| Katalysator F | 14/27 | 12/23 | 106°C | 76 |
| DBTL (Vergleichsversuch) | | 15/30 | 105°C | 75 |

* Bei einer konstanten Biegespannung von 0,3 M Pa und einer Aufheizgeschwindigkeit von 50 K/W wird die Temperatur ermittelt, bei der der einseitig belastete Krag-Balken eine Durchbiegung von 10 mm erreicht hat. Diese Kenndaten sind Kurzzeitwerte.
Die erfindungsgemässen Katalysatoren zeigen eine wesentlich höhere Aktivität als DBTL. Ausserdem besitzen die damit hergestellten Formteile eine verringerte Neigung zur Bildung von Abbläsern.

**Patentansprüche**

1. Verfahren zur Herstellung von gegebenenfalls geschäumten Polyurethanen durch Umsetzung von Polyisocyanaten mit organischen Verbindungen mit mindestens zwei gegenüber Isocyanaten aktiven Wasserstoffatomen vom Molekulargewicht 400–10 000 in Gegenwart von Aktivatoren und gegebenenfalls in Gegenwart von Treibmitteln und Kettenverlängerungsmitteln vom Molekulargewicht 32–400 und weiteren an sich bekannten Hilfs- und Zusatzstoffen, dadurch gekennzeichnet, dass man als Aktivatoren Verbindungen der allgemeinen Formel

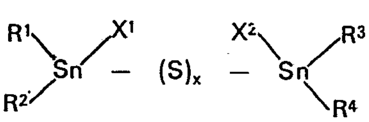

in der
$R^1$, $R^2$, $R^3$, $R^4$ gleich oder verschieden sind und $C_1$–$C_{20}$-Alkyl, $C_5$–$C_7$-Cycloalkyl, $C_6$–$C_{14}$-Aryl oder $C_7$–$C_{30}$-Alkaryl bedeuten,
$X^1$ und $X^2$ gleich oder verschieden sind und für Halogen oder für einen Rest $-OR^5$, $-SR^6$ oder

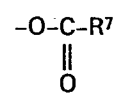

stehen, wobei $X^1$ und $X^2$ nicht gleichzeitig für ein Halogenatom stehen,
$R^5$, $R^6$, $R^7$ gleich oder verschieden sind und $C_1$–$C_{20}$-Alkyl, $C_5$–$C_7$-Cycloalkyl, $C_6$–$C_{14}$-Aryl oder $C_7$–$C_{30}$-Alkyryl bedeuten und $x \geq 1$ ist,
einsetzt.

2. Verfahren gemäss Anspruch 1, dadurch gekennzeichnet, dass in der allgemeinen Formel $R^1$ und $R^2$ sowie $R^3$ und $R^4$ gleich sind und Halogen ein Chlor-Atom bedeutet.

3. Verfahren nach Anspruch 1 und 2, dadurch gekennzeichnet, dass in der allgemeinen Formel $R^1$–$R^4$ einen $C_1$–$C_{12}$-Alkylrest und $R^5$–$R^7$ einen $C_1$–$C_{20}$-Alkylrest bedeuten.

4. Verfahren gemäss Anspruch 1 bis 3, dadurch gekennzeichnet, dass die Aktivatoren der

allgemeinen Formel in einer Menge von 0,005–1 Gew.-%, bevorzugt 0,01–0,5 Gew.-%, bezogen auf die Verbindung mit mindestens zwei aktiven Wasserstoffatomen vom Molekulargewicht 400–10 000, eingesetzt werden.

5. Lagerstabiles Vorprodukt für die Durchführung eines Verfahrens gemäss Anspruch 1–4, dadurch gekennzeichnet, dass es

a) eine mindestens zwei gegenüber Isocyanaten reaktive Wasserstoffatome enthaltende organische Verbindung vom Molekulargewicht 400–10 000,

b) eine katalytisch aktive Menge eines Aktivators der allgemeinen Formel

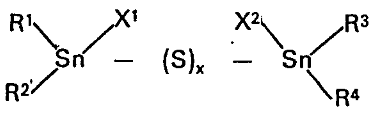

worin $R^1$–$R^4$, $X^1$, $X^2$ und x wie in Anspruch 1 definiert sind, enthält.

6. Lagerstabiles Vorprodukt gemäss Anspruch 5, dadurch gekennzeichnet, dass es zusätzlich

a) eine katalytische Menge eines metallischen oder nichtmetallischen Cokatalysators und gegebenenfalls

b) ein Kettenverlängerungsmittel vom Molekulargewicht 32–400

c) ein Treibmittel

d) einen Zellstabilisator und gegebenenfalls

e) weitere an sich bekannte Hilfs- und Zusatzstoffe enthält.

7. Verfahren gemäss Anspruch 1–4, dadurch gekennzeichnet, dass ein Polyisocyanat mit einem Vorprodukt gemäss Anspruch 5 oder 6 umgesetzt wird.

8. Verfahren gemäss Anspruch 1–4 und 7, dadurch gekennzeichnet, dass Formteile mit einer dichten Aussenhaut, die nicht sprunghaft in den Schaumstoffkern übergeht, und einem Schaumstoffkern mit differentiell abnehmender Dichte, deren Minimum etwa in der Mitte des Formteilquerschnitts liegt, hergestellt werden.

**Claims**

1. Process for the production of optionally foamed polyurethanes by reacting polyisocyanates with organic compounds containing at least two isocyanate-active hydrogen atoms and having a molecular weight of 400–10,000 in the presence of activators and optionally in the presence of blowing agents and chain-extending agents having a molecular weight of 32–400 and other additives and auxiliaries known per se, characterised in that the activators used are compounds of the general formula

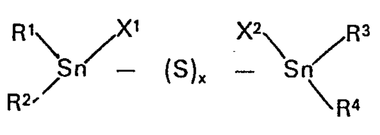

in which

$R^1$, $R^2$, $R^3$ and $R^4$ are identical or different and denote $C_1$–$C_{20}$-alkyl, $C_5$–$C_7$-cycloalkyl, $C_6$–$C_{14}$-aryl or $C_7$–$C_{30}$-alkaryl,

$X^1$ and $X^2$ are identical or different and represent halogen or a radical $-OR^5$, $-SR^6$ or

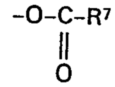

with the proviso that $X^1$ and $X^2$ do not simultaneously represent a halogen atom,

$R^5$, $R^6$ and $R^7$ are identical or different and denote $C_1$–$C_{20}$-alkyl, $C_5$–$C_7$-cycloalkyl, $C_6$–$C_{14}$-aryl or $C_7$–$C_{30}$-alkyryl, and

$x \geq 1$.

2. Process according to Claim 1, characterised in that, in the general formula, $R^1$ and $R^2$ and also $R^3$ and $R^4$ are identical and halogen denotes a chlorine atom.

3. Process according to Claim 1 and 2, characterised in that, in the general formula, $R^1$–$R^4$ denote a $C_1$–$C_{12}$-alkyl radical and $R^5$–$R^7$ denote a $C_1$–$C_{20}$-alkyl radical.

4. Process according to Claim 1 to 3, characterised in that the activators of the general formula are used in a quantity of 0.005–1% by weight, preferably 0.01–0.5% by weight, based on the compound containing at least two active hydrogen atoms and having a molecular weight of 400–10,000.

5. Storage-stable starting product for carrying out a process according to Claim 1–4, characterised in that it contains

a) an organic compound containing at least two isocyanate-reactive hydrogen atoms and having a molecular weight of 400–10,000 and

b) a catalytically active quantity of an activator of the general formula

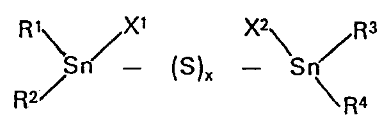

in which $R^1$–$R^4$, $X^1$, $X^2$ and x are as defined in Claim 1.

6. Storage-stable starting product according to Claim 5, characterised in that it additionally contains

a) a catalytic quantity of a metallic or non-metallic co-catalyst and, optionally,

b) a chain-extending agent having a molecular weight of 32–400,

c) a blowing agent,

d) a cell stabiliser and, optionally,

e) other auxiliaries and additives known per se.

7. Process according to Claim 1–4, characterised in that a polyisocyanate is reacted with a starting product according to Claim 5 or 6.

8. A process according to Claim 1–4 and 7, characterised in that mouldings having an impervious outer skin, which does not merge suddenly with the foam core, and a foam core having a differentially decreasing density, of which the minimum lies substantially in the middle of the mould parting cross section, are produced.

**Revendications**

1. Procédé de production de polyuréthannes éventuellement cellulaires par réaction de polyisocyanates avec des composés organiques ayant au moins deux atomes d'hydrogène actifs vis-à-vis d'isocyanates, de poids moléculaire égal à 400–10 000, en présence d'activateurs et le cas échéant en présence de porogènes et d'agents d'allongement de chaîne d'un poids moléculaire de 32 à 400 et d'autres adjuvants et additifs connus, caractérisé en ce qu'on utilise comme activateurs des composés de formule générale

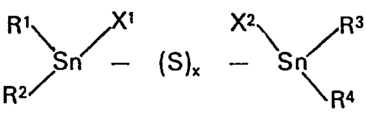

dans laquelle
$R^1$, $R^2$, $R^3$, $R^4$ sont identiques ou différents et représentent des groupes alkyle en $C_1$ à $C_{20}$, cycloalkyle en $C_5$ à $C_7$, aryle en $C_6$ à $C_{14}$ ou alkaryle en $C_7$ à $C_{30}$,
$X^1$ et $X^2$ sont identiques ou différents et représentent un halogène ou un reste $-OR^5$, $-SR^6$ ou

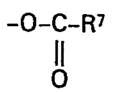

, $X^1$ et $X^2$ ne représentant pas en même temps un atome d'halogène,
$R^5$, $R^6$, $R^7$ sont identiques ou différents et représentent un groupe alkyle en $C_1$ à $C_{20}$, cycloalkyle en $C_5$ à $C_7$, aryle en $C_6$ à $C_{14}$ ou alkylaryle en $C_7$ à $C_{30}$ et
x a une valeur supérieure ou égale à 1.

2. Procédé suivant la revendication 1, caractérisé en ce que dans la formule générale, $R^1$ et $R^2$ de même que $R^3$ et $R^4$ sont identiques et l'halogène représente un atome de chlore.

3. Procédé suivant les revendications 1 et 2, caractérisé en ce que dans la formule générale $R^1$–$R^4$ représentent un reste alkyle en $C_1$ à $C_{12}$ et $R^5$–$R^7$ représentent un reste alkyle en $C_1$ à $C_{20}$.

4. Procédé suivant les revendications 1 à 3, caractérisé en ce que les activateurs de la formule générale sont utilisés en une quantité de 0,005 à 1% en poids, de préférence de 0,01 à 0,5% en poids par rapport au composé ayant au moins deux atomes actifs d'hydrogène, de poids moléculaire égal à 400-10 000.

5. Progéniteur stable à l'entreposage pour la mise en œuvre d'un procédé suivant les revendications 1 à 4, caractérisé en ce que

a) il est un composé organique d'un poids moléculaire de 400 à 10 000 contenant au moins deux atomes d'hydrogène réactifs vis-à-vis d'isocyanates,

b) il contient une quantité catalytiquement active d'un activateur de formule générale

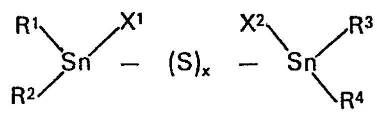

dans laquelle $R^1$–$R^4$, $X^1$, $X^2$ et x ont les définitions données dans la revendication 1.

6. Progéniteur stable à l'entreposage suivant la revendication 5, caractérisé en ce qu'il contient en outre

a) une quantité catalytique d'un co-catalyseur métallique ou non métallique et, le cas échéant,

b) un agent d'allongement de chaîne d'un poids moléculaire de 32 à 400

c) un porogène

d) un agent de stabilisation des cellules, et le cas échéant,

e) d'autres adjuvants et additifs connus.

7. Procédé suivant les revendications 1 à 4, caractérisé en ce qu'un polyisocyanate est amené à réagir avec un progéniteur suivant la revendication 5 ou 6.

8. Procédé suivant les revendications 1 à 4 et 7, caractérisé en ce qu'on produit des pièces moulées présentant une pellicule extérieure dense qui ne passe pas brusquement dans le noyau cellulaire, et un noyau cellulaire à densité différentiellement décroissante dont le minimum se situe à peu près au milieu de la section transversale de la pièce moulée.